# EUROPEAN PATENT SPECIFICATION

(11) **EP 2 489 528 B1**
(45) Date of publication and mention of the grant of the patent: **05.08.2015**
(21) Application number: 11154659.4
(22) Date of filing: 16.02.2011
(51) Int. Cl.: B60C 27/10, B60C 27/06

(54) **Anti slip device for a wheel**
Antirutschvorrichtung für ein Rad
Dispositif anti-dérapage pour roue

(43) Date of publication of application: 22.08.2012
(73) Proprietor: Thule Sweden AB, 330 33 Hillerstorp (SE)
(72) Inventor: Arrigoni Neri, Marco, 23847, Molteno (IT); Farina, Luigi, 23847, Molteno (IT); Necchi, Stefano, 23847, Molteno (IT)
(74) Representative: Valea AB

(56) References cited:
- EP-A2- 1 331 109
- WO-A1-97/25216
- CH-A5- 677 215

## Description

### TECHNICAL FIELD

The present invention relates to an anti slip device, such as a snow chain, which is mountable on a wheel of a vehicle. The anti slip device is specifically user friendly and has parts which are configured for improving the mounting and dismounting of the anti slip device to a wheel.

### BACKGROUND OF THE INVENTION

Snow chains of the prior art is generally mounted to the wheel by positioning the snow chain on the wheel, thereafter turning the wheel by moving the vehicle, and thereafter reposition the snow chains and securing the snow chain to the wheel. The prior art solutions have been improved by introducing a different concept in which the snow chains are mounted automatically. Automatic mounting is generally implemented by the use of spring members and tensioning systems which can be preloaded with a tension force. When the wheel turns, after the snow chain has been mounted to a first position, the spring which has been loaded in the tensioning system automatically tensions and secures the connection arrangement used on the snow chain. One such system is disclosed in EP 0,438,999 A1.

The snow chain disclosed in EP 0,438,999 A1 utilizes a rigid ring with a pivotally connected shackle which is connected to two springs. The springs are in turn arranged to a chain which extends across the tread of the wheel to the connection arrangement of the opposite side of the wheel.

An anti-slip device according to the features of the preamble of claim 1 is known from EP 1331109 A2.

### SUMMARY OF THE INVENTION

The solutions of the above mentioned prior art suffers from a drawback; it is not very user friendly in terms of mounting and demounting the snow chain to the wheel. It is an object of the present invention to provide a user friendly anti slip device, such as a snow chain.

The objective is met by an anti slip device for a wheel according to claim 1. The wheel has a first side, a second side and a tread. The anti slip device comprises a first connection arrangement adapted to be positioned substantially adjacent the first side of the wheel, a second connection arrangement adapted to be positioned substantially adjacent the second side of the wheel, and at least one anti slip member extending between the first connection arrangement and the a second connection arrangement. The at least one anti slip member is adapted to provide the tread of the wheel with an anti slip surface. The anti slip device also comprises a securing arrangement, or a tensioning device, for securing the anti slip device to the wheel comprising a flexible elongated element.

The first connection arrangement comprises a first arc formed portion with a first end and a second arc formed portion with a first end. The flexible elongated element extends between and past a first working point on the first arc formed portion and a second working point on the second arc formed portion (22), and optionally runs substantially adjacent the first and second arc formed portions. The flexible elongated element enables the first ends of the arc formed portions to be displaced towards each other to a position at which the anti slip device can be secured to the wheel. The anti slip device can be a snow chain.

The present invention provides for an anti slip device which is easy to mount using the arc formed portions while still using the benefits of a securing arrangement in which both the ends of the flexible elongated element can be tightened. Herein, the first and the second ends can also form a loop, i.e. the first end and the second can be connected. This enables a short displacement of the ends of the flexible elongated element to secure the anti slip device to the wheel.

The flexible elongated element extends displacably between, and past, the working points. In other words, it floats while being in working cooperation with the points. Examples of this type of connections are tackles and slide connections, in general terms slip connections.

To simplify the handling characteristics of the arc formed portions, they can be provided with one or more grip portions for mounting the anti slip device to the wheel. A grip portion is specifically adapted to a users fingers or hand to simplify the handling of the anti slip device. It could also be a specific designated area for this purpose.

The arc formed portions can be formed by different parts or as one integral part. For example, the first arc formed portion and the second arc formed portion can each comprise a second end, wherein the first arc formed are pivotally connected at their second ends. Optionally the first arc formed portions are integrally formed.

The flexible elongated element can extend along the full length of the first and second arc formed portions or optionally only along parts thereof. However, it could extend directly between the first ends of the first and second arc formed portions, without extending along the arc formed portions.

The first and second ends of the flexible elongated element can be configured to extend across the tread of the wheel at a first position. The first ends of the first and second arc formed portions are in this embodiment arranged substantially opposite of the first position, with respect to the first connection member and the wheel after the anti slip device has been mounted on the wheel. This enables the arc formed portions to be tightened readily in a direction towards each other.

To secure the anti slip device, the first and second ends of the flexible elongated element is arranged, fixedly arranged, or permanently arranged, to a securing arrangement for securing the anti slip device to the wheel. The securing arrangement can comprise a first tensioning member adapted to impart a force component to the flexible elongated element. Such tensioning member could be foot operated or hand operated, or operated using a secondary device, such as a motor driven device or man driven device.

According to an aspect of an embodiment of the present invention, the securing arrangement comprises an elongated base member, and the first tensioning member of the securing arrangement is adapted to be displaced in the longitudinal direction of the elongated base member. This can be done using a hand or the foot or any other device.

The securing arrangement advantageously comprises a retraction member. The retraction member can be s spring, an elastic member, such as a rubber-like elastic member. The retraction member strives towards retaining its original or relaxed form after being extended. For example one or more springs could be a retraction member. The securing arrangement can further comprise a second tensioning member. The at least one retraction member is arranged between the first and second tensioning members and connected with the first and the second tensioning member.

The securing arrangement can be provided with a self tensioning device, which upon turning the wheel mounts itself around the wheel;
from a position in which it is almost mounted, to a ready to use position. By the term ready to use is meant that the vehicle can drive away using the anti slip device mounted on the wheel or wheels.

The first tensioning member can be adapted to stretch, or extend, the at least one retraction member upon operation, or manipulating, the first tensioning member. The second tensioning member of the securing arrangement is adapted to be retracted towards the first tensioning member by the at least one retraction member. Thus by first displacing the first tensioning member, the second tensioning member can be displaced by means of the retraction member.

The first and second ends of the flexible elongated element, or an equivalent part to the first and the second ends of the flexible elongated element, e.g. a part of a loop, can be attached to the second tensioning member.

The first end of the first arc portion and the first end of the second arc formed portion are formed by a bendable but substantially self retaining material, such as spring steel, carbon reinforced plastics, carbon fiber based materials or polymeric materials.

### BRIEF DESCRIPTION OF THE DRAWINGS

Embodiments of the present invention will be described in greater detail with reference to the accompanying figures in which;
figures 1-3 show an embodiment of an anti slip device for a wheel of a vehicle and mounting of the same to a wheel;
figures 4-7 show an embodiment of a securing arrangement of the anti slip device and its operation;
figure 8 shows the a side of the wheel after the anti slip device has been mounted to the wheel;
figures 9-11 shows the operation to remove the anti slip device from figures 1-8;
figures 12a-13a and 13c show different embodiments of parts of an anti slip device according to the present invention;
figure 13b shows a different embodiment which does not form part of the invention;

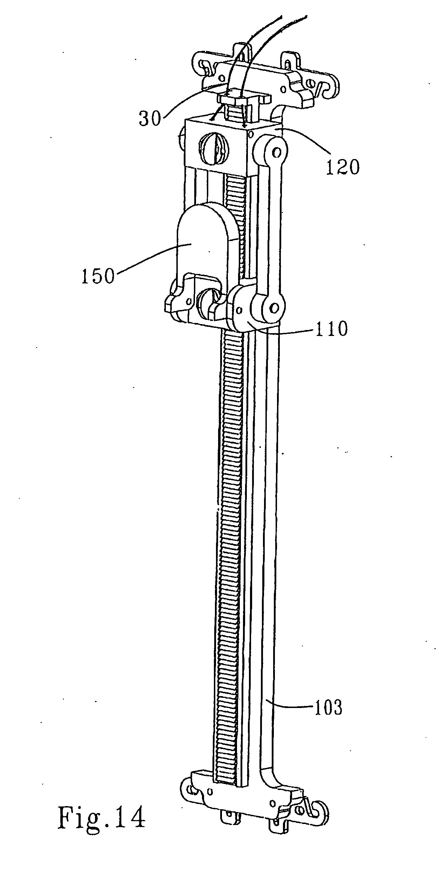

figures 14-16 show the operation of tensioning the securing arrangement by foot and; figures 17-19 show a second embodiment of a securing arrangement of an anti slip
device according to an embodiment of the present invention.

### DETAILED DESCRIPTION OF PREFERRED EMBODIMENTS

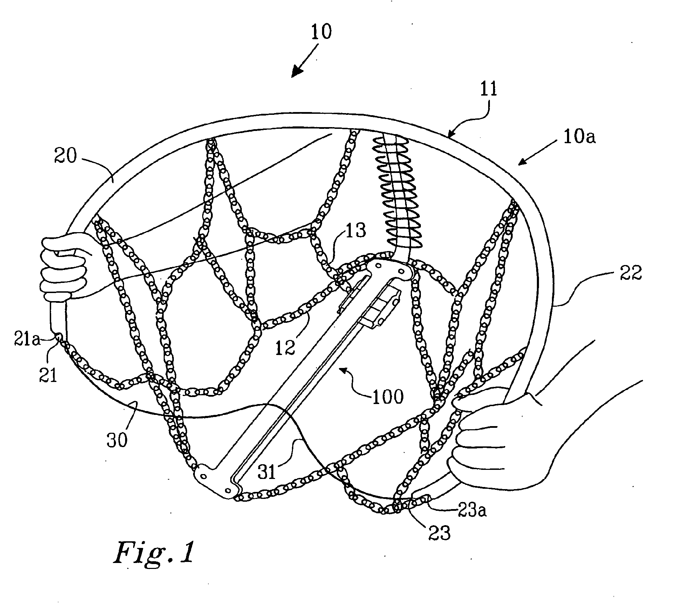

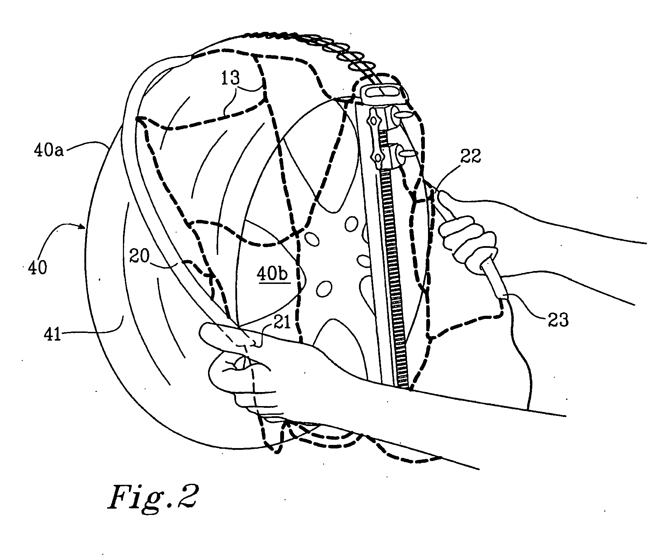

Figure 1 shows an anti slip device 10 for providing a wheel of a vehicle with an anti slip surface and improved anti slip properties. An embodiment of the anti slip device 10 according to the present invention is illustrated as a snow chain 10a which is mounted on a wheel, se figures 2-4 for example, a procedure which will be descried in greater detail below. The wheel is referred to as having a first and a second side and a tread there between. The wheel can be arranged on any type of vehicle such as a car, truck or the like. As used herein, the first side of the wheel is generally arranged towards the vehicle and the second side of the wheel is generally arranged facing away from the vehicle.

Turning to figure 1, the anti slip device 10 comprises a first connection arrangement 11, adapted to be positioned adjacent, or substantially adjacent, the first side of the wheel. A second connection 12 arrangement is adapted to be positioned adjacent, or substantially adjacent, the second side of the wheel. Between the first and the second connection arrangement is at least one an anti slip member 13 arranged to provide the tread with improved friction properties, enabling an improved friction between the tread and the ground during use of the vehicle.

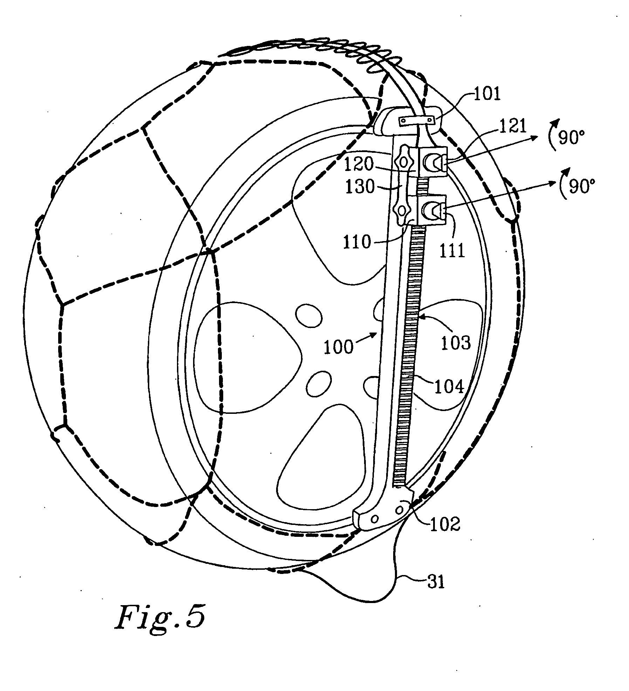

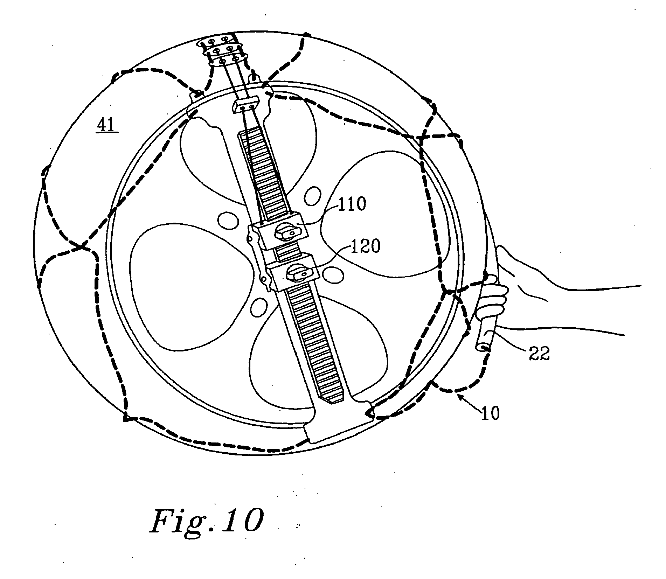

The anti slip member 13 can be a plurality of chains sections as shown in the illustrated embodiments figures 1-11 for example. The anti slip member could however be a friction increasing cloth or fabric for example. The anti slip member(s) 13 extends between the first connection member 11 and the second connection member 12 across the tread of the wheel.

The anti slip device further comprises a securing arrangement 100 for securing the anti slip device 10 to the wheel. The securing arrangement is adapted to tension or fix parts, or a part, of the securing arrangement 100 to thereby secure the anti slip device 10 to the wheel. In the shown embodiment, this is done by using a flexible elongated element 30. The flexible elongated element 30 can be a chain, a wire, steel wire, steel cord, nylon rope or thread, or the like. Using a steel wire, steel cord, string or the like, i.e. an flexible elongated element having a cross section with a uniform diameter along the whole length, or parts of the lengths, of the flexible elongated element, enables a low clearance with respect to the anti slip members on the thread. It should be noted that the diameter can however differ along the length if the flexible elongated element in some embodiments. This permits the flexible elongated element to cross the tread without exceeding the height of the anti slip device. In the shown embodiment, the anti slip members are chains. In an embodiment, the clearance of the flexible elongated element is lower than the clearance of the anti slip member(s). A low clearance also enables a very slim and snugly fit of the flexible elongated element between the wheel and the ground permitting the securing arrangement to be better tightened as compared to a chain having a similar or higher clearance as the anti slip members.

In the shown embodiment, the flexible elongated element 30 is a steel wire which is arranged in working cooperation with a tensioning device of the securing arrangement 100. The flexible elongated element 30 comprises a first and a second end 30a, 30b, (not shown in figure 1).

The first connection member comprises 11 comprises a first arc formed portion 20 having a first end 21 and a second arc formed portion 22 having a first end 23. In the shown embodiment, the first arc formed portion 20 is integrally formed with the second arc formed portion 22. The arc formed portions 20, 22 have their own structural integrity, thus they retain their arc form without any external influences or manipulation. While at the same time, they can be flexible enough to permit the first arc formed portion to be partly displaced with respect to the second arc formed portion, for example by means of a hinge connection of by means of the flexibility of the material itself.

As seen in figure 1, the flexible elongated element 30 extends displaceably between the first end 21 of the first arc formed portion 20 and the first end 23 of the second arc formed portion 22. In the shown embodiment, the first ends 21, 23 of the first and the second arc formed portions are functioning as working points 21 a, 23a for the flexible elongated element 30. The flexible elongated element is displaceable, it floats freely, while at the same time cooperates with these points during attaching the anti slip device 10 to the wheel 40 so as to displace the first and second ends 21, 23 towards each other. As will be described in greater detail below, the flexible elongated element 30 runs substantially adjacent the first and second arc formed portions 20, 22, thus enabling upon tightening of the flexible elongated element 30 the first ends 21, 23 of the arc formed portions 20, 22 to be displaced towards each other to secure the anti slip 10 device to the wheel.

The second connection member 12 is in the shown embodiment in figure 1 formed by a chain which have a circular form. The second connection member 12, in the form a chain, thus has a substantially circular form, after it has been positioned on the wheel. It should be noticed that the second connection member 12 does not have the integrity to retain the circular form if positioned on the ground for example, as compared to the arc formed portions 20, 22 of the first connection member 11. However, also the second connection member could be a ring like member having structural integrity.

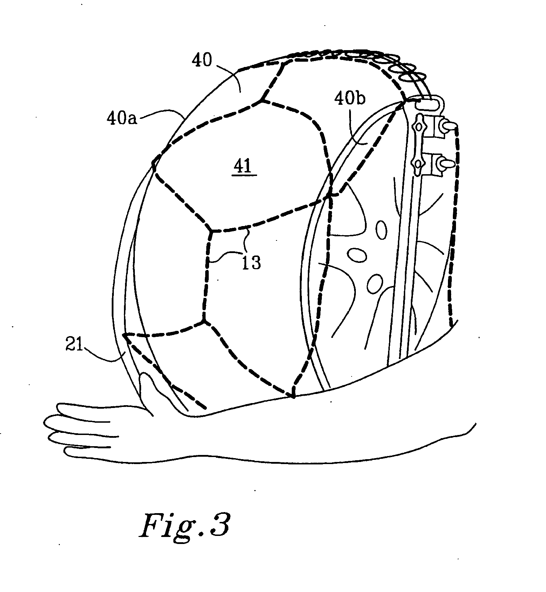

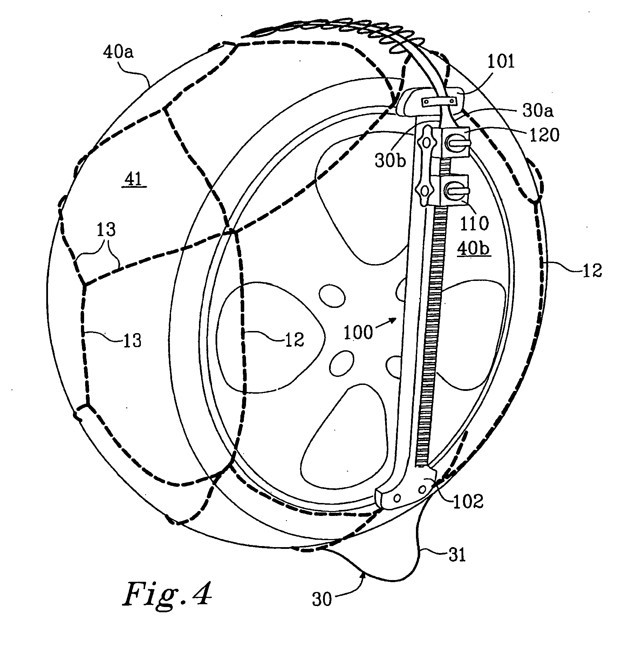

Figures 2-4 show how an embodiment of the anti slip device 10 according to the present invention can be mounted to a wheel 40. The wheel comprises a first and a second side 40a, 40b, and a tread 41. The user (not fully shown) is facing towards the second side 40b of the wheel 40, while the first side 40a of the wheel is facing the vehicle (not shown). A user grips the first and the second arc formed portions 20, 22, as illustrated by a first and a second arm and put the anti slip members 13, in the form of a plurality of chains, onto the tread 41 of the wheel 40. The first ends 21, 23 of the first and the second arc formed portions 20, 22 are thereafter inserted or moved to the back of the wheel, i.e. the to the first side 40a of the wheel 40, as shown in figure 3, whereafter the user can let go of the first and the second arc formed portions 20, 22. The first and the second arc formed portions 20, 22 can thereafter, if the first and the second arc formed portions 20, 22 are integrally formed or formed by a first and a second portion connected together, flex into the proper position, thus return to their initial relaxed form, supported by their own structural integrity. Figure 4 shows the anti slip device after the first and the second arc formed portions has relaxed. The first and the second arc formed portions 20, 22 are thus adapted to be positioned on either side of an axle of the vehicle on which the wheel is attached to, i.e. on either side of the axis of rotation of the wheel. As such they are arranged opposite of each other when the anti slip device 10 is mounted on a wheel.

When the first and the second arc formed portions are positioned at the first side 40a of the wheel 40, the flexible elongated element 30, in this case in the form of the steel wire 31, needs to be tightened. This is done by means of the securing arrangement 100. The securing arrangement 100 is adapted to tighten the flexible elongated element 30 so that the first ends 21, 23 of the arc formed portions 20, 22 are displaced towards each other, thereby tightening, or pulling, the anti slip members 13 properly across the tread around substantially the whole periphery of the wheel 40. That part of the wheel 40 which is facing towards the ground is of course excluded due to the weight of the vehicle. However, the flexible elongated element 30 can be readily tightened around the surface of the tread which faces the ground.

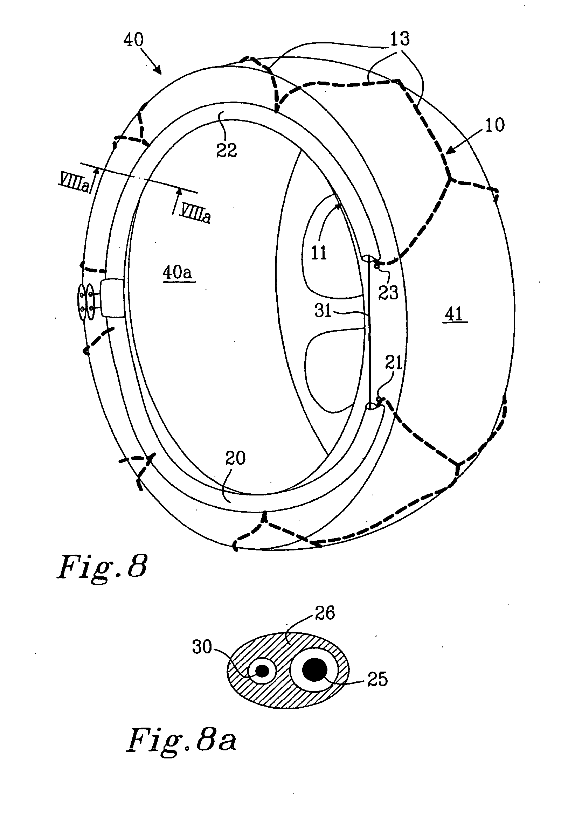

The flexible elongated element 30 extends across the tread 41 of the wheel 40 so that to first and the second ends 30a, 30b are both arranged to the securing device 100. The flexible elongated element 30 thus runs from the second side 40b of the wheel 40, across the tread 41 to the first side 40a of the wheel 40, back across the tread 41 to the second side 40b of the wheel 40. The flexible elongated element 30 thus extends continuously at the first side 40a of the wheel 40, without any end present at the first side 40a of the wheel 40. As both the first and the second ends 30a, 30b of the flexible elongated element 30 are arranged to the securing arrangement 100, the flexible elongated element 30 can be tightened and stretched far enough to secure the anti slip device 10 to the wheel 40, using a short tightening length, as will be described below. Figure 8 shows the first side 40a of the wheel 40 after the flexible elongated element 30 has been tightened.

As is noticed, the securing arrangement 100 has a substantially elongated form defined by an elongated base member 103 having a second end 101, 102. A first and a second tensioning member 110, 120 are displaceably arranged on the elongated base member 103 of the securing arrangement 100. The elongated base member 103 extends between points or section of the periphery of the second connection arrangement 12, substantially as a diameter of a circle.

The first and the second tensioning members 110, 120 each comprises a lock mechanism 111, 121 which can be operated to lock the positions of the first and the second tensioning members 110, 120 from displacement along the elongated base member 103 respectively. The lock mechanisms 111, 121 are adapted to be in working cooperation with a ratched surface 104 of the elongated base member 103, which extends in the longitudinal direction of the elongated base member 103. However, using a spring actuated ratch member, cooperating with the ratched surface 104 of the elongated base member 103, the first and the second tensioning members 110, 120 can be displaced in a direction towards the second end 102 of the elongated base member 103, while being prevented from being displaced in a direction towards the first end 101 of the elongated base member 103. Hence, according to an embodiment, the first and the second tensioning members 110, 120 and the elongated base member 103, comprises lock means enabling them to be displaced in a direction towards the second end 102 of the elongated base member 103, while being prevented from being displaced in a direction towards the first end 101 of the elongated base member 103. The lock mechanisms 111, 121 can further be operated to unlock the first and the second tensioning member 110, 120 enabling displacement in any direction in the longitudinal direction of the elongated base member.

At least one retraction member 130 is arranged between the first and the second tensioning members 110, 120. In the shown embodiment, the retraction member 130 is formed by an elastic rubber-like member, which can be elongated and thereafter retracted. A spring or a similar device could also be used.

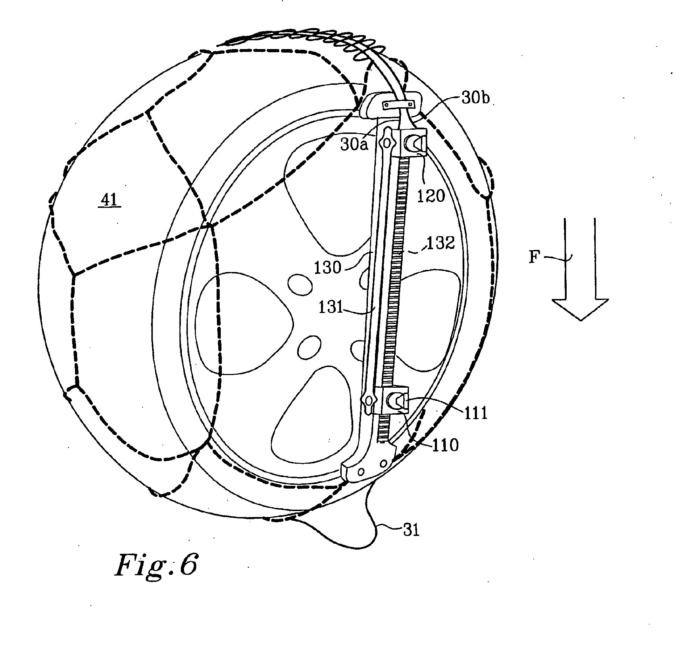

In figure 6, the first tensioning member 110 has been displaced in the longitudinal direction of the elongated base member 103 towards the second end 102 of the elongated base member 103, whereupon the retraction member 130, in this case in the form of two elastic rubber-like members 131, 132, is tensioned. The first tensioning member 110 has thus been displaced towards a position substantially opposite to the position at which the first and the second ends 30a, 30b crosses the tread 41 of the wheel 40, thus readily away from that position. The first and the second ends 30a, 30b of the flexible elongated element 30 is as a consequence strained by the retraction member 130 as the retraction member 130 is trying to retain its original state, or relaxed state, by retracting itself. A force component, illustrated by the arrow F, is imparted to the second tensioning member 120, and the flexible elongated element 30. The first tensioning member 110 can be locked in the tensioned position using the lock mechanism 111.

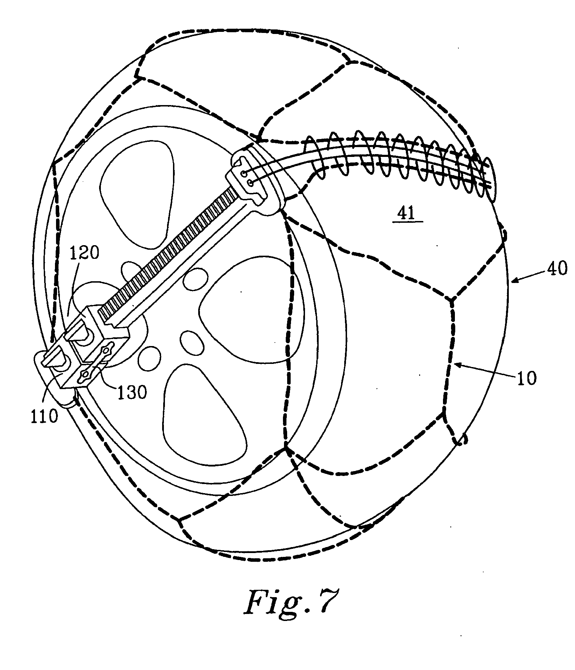

The second tensioning member 120, and thus the first and the second ends 30a, 30b of the flexible elongated element 30 will, upon rotating the wheel as shown in figure 7, be permitted to be retracted towards the first tensioning member 110 by means of the retraction member 130. The anti slip device 10 is thus automatically secured to the wheel 40 when the wheel 40 turns and the flexible elongated element 30 is permitted to be fully retracted across the tread 41 of the wheel 40 as a consequence of the displacement of the second tensioning member 120.

Figure 8 shows the first side 40a of the wheel 40 after the wheel 40 has been rotated and the flexible elongated element 30 has been tensioned. The anti slip device 10 is thus secured to the wheel 40. In figure 8 the first and the second arc portions 20, 22 can be seen as well as the anti slip members 13, and the tread 41 of the wheel 40.

Figure 8a shows a cross section of an embodiment of the first and the second arc formed portions 20, 22. In this shown embodiment in figure 8-8a, the first and the second arc formed portions 20, 22 are formed by a substantially an open ring member 25, manufactured from a bendable but substantially, or to a degree fully, self retaining material such as spring steel. A sheath component 26, or tube component, comprises the form of an open ring member and sheaths the flexible elongated element 30 and the open ring member 25. The sheath component can be rigid or soft however, while being strong enough for a proper attachment of the anti slip device and the forces such anti slip device can be subjected to. The anti slip members 13 are connected to the open ring member 25, which forms a part of the first connection arrangement 11 in the shown embodiment. The flexible elongated element 30 could however be attached to the open ring member 25 using individual rings or the like and not as shown in figures 8-8a a continuous sheet member.

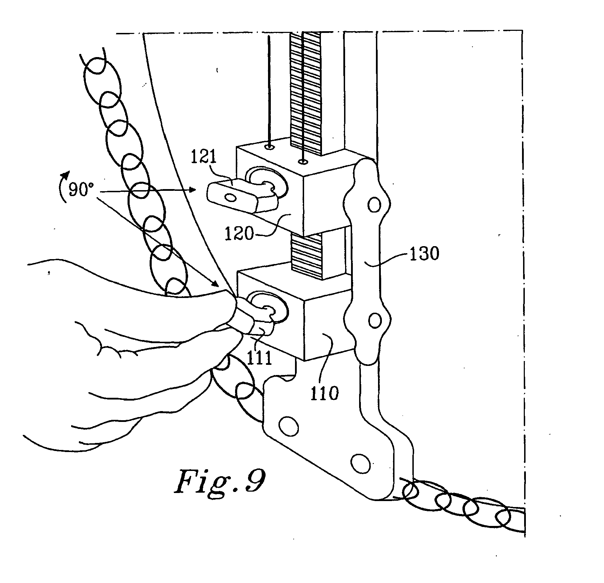

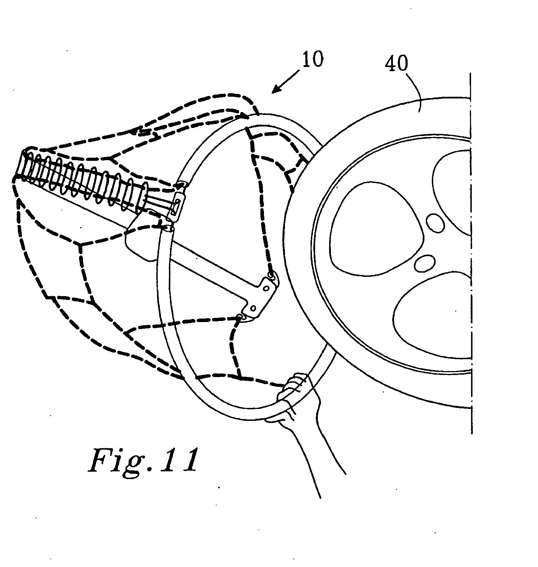

To remove the anti slip device, the lock mechanisms 111, 121 are operated to unlock the first and the second tensioning device 110, 120, as shown in figure 9, whereafter one of the arc formed portions 22, can be pulled to loosen the anti slip members 13 from the tread 41 of the wheel 40. The anti slip device 10 thereafter simply be removed from the wheel 40, as shown in figure 11.

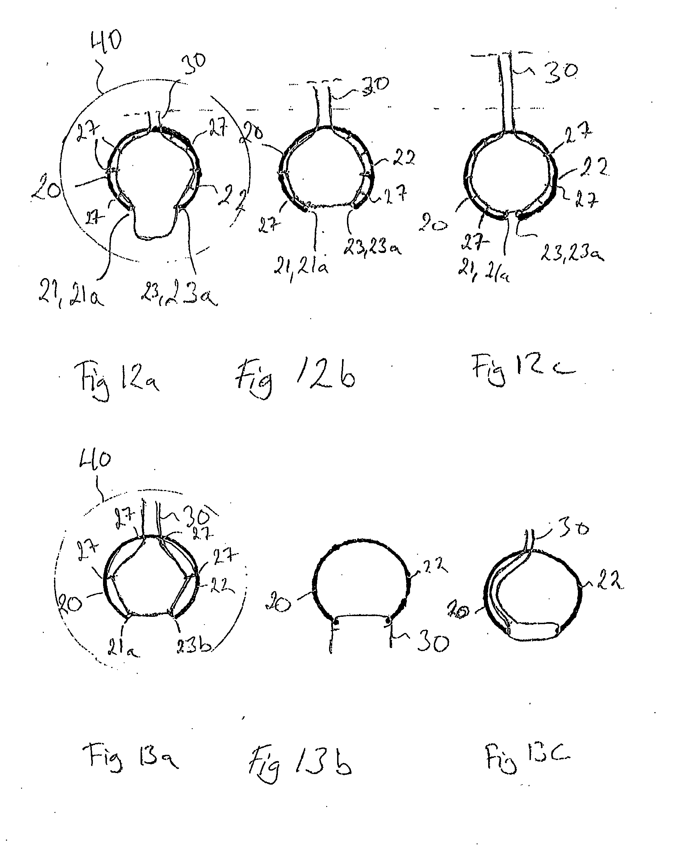

Figure 12a shows an embodiment of parts of the anti slip device 10 according to the present invention. Figure 12 shows the first and second arc formed portion 20, 22, the periphery of the wheel 40, the flexible elongated element 30, in this case in the form of a steel wire. The flexible elongated element 30 is attached to the first and the second arc formed portions 20, 22 at a plurality of attachment points 27. A circular steel ring is used at attachment points 27 to attach the flexible elongated element 30 to the first and the second portions 20, 22. For the sake of clarity, not all of the attachment points 27 have reference signs. The flexible elongated element 30 can slip, or slide at each point, i.e. run freely. At each first end 21, 23 of the first and the second arc formed portions 20, 22, the first and the second arc formed portions 20, 22 has working points which cooperates with the flexible elongated element 30. At this point, as well as at the attachment points 27, the flexible elongated element 30 is displaceable, it floats freely. In figure 12b, the flexible elongated member 30 has been tightened, e.g. using the tensioning device shown in figures 4, 16 or 17 for example. The working points 21 a, 23a cooperates and provides for supporting surfaces for the flexible elongated member when attaching the anti slip device 10 to the wheel 40 so as to displace the first and second ends 21, 23 towards each other to a position in which they can be secured, as shown in figure 12c.

When using a sheath component, as described with reference to figures 8-8a, the number of attachment points can be considered to be very high.

Figures 13a-13c show different configurations of how the flexible elongated member 30 is arranged to the first and the second arc formed portions 20, 22. Again, in figure 13a, the periphery of the wheel 40 is shown. Figure 13a shows the flexible elongated member 30 arranged with only two attachment points 27 to each arc formed portion 20, 22. Figure 13b shows an embodiment in which the flexible elongated member 30 does not extend along any section of the first or second arc formed portions 20, 22 but extends across the tread of the wheel directly at that point without first crossing the area formed between the first and the second arc formed portions 20, 22. Thereby, the embodiment of Figure 13b does not form part of the invention. Figure 13c shows an embodiment in which the flexible elongated member 30 extends along only one of the first or second arc formed portions.

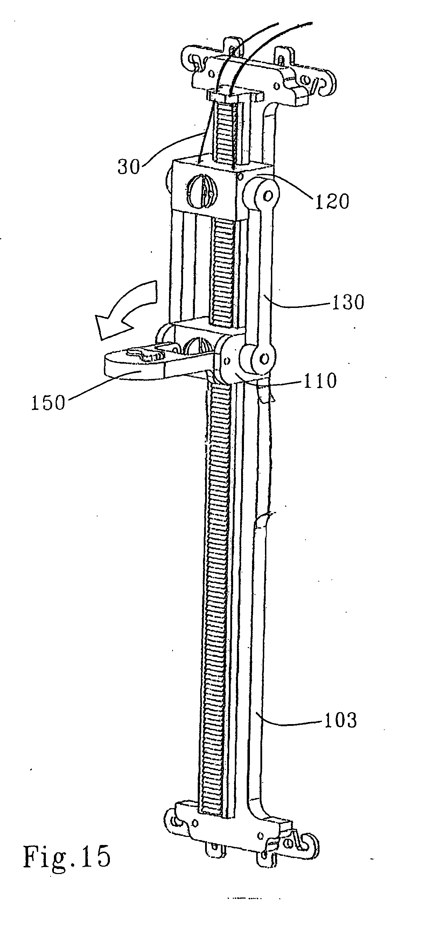

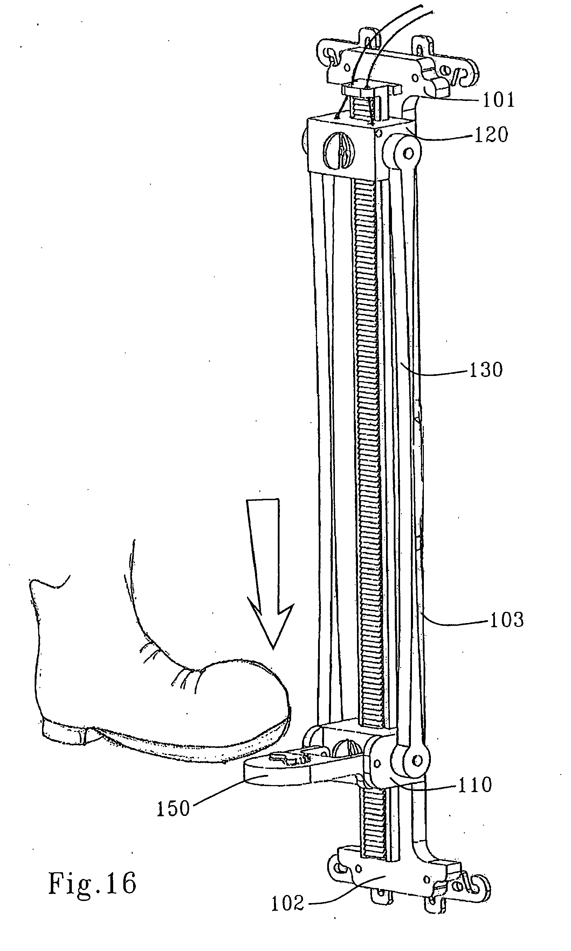

As shown in figures s 14-16, the first tensioning member 110 can be provided with a foot pad, for enabling the first tensioning member 110 to be foot operated. The anti slip device 10, according to an embodiment of the present invention can thus be foot operated. The first tensioning member 110 can be provided with a pivotable foot pad 150. To displace the first tensioning member 110, and thereby to impart the second tensioning member 120 with a force component, the foot pad 150 can be positioned in an operable position, as shown in figure 15. In the operable position, the foot pad is substantially perpendicular to the elongated base member 103. As is illustrated by the arrow in figure 16, the first tensioning member 120 can be displaced by a users foot towards the second end 102 of the elongated base member 103, which is towards a position substantially opposite to the position at which the first and the second ends 30a, 30b crosses the tread 41 of the wheel, thus readily away from that position. As is noticed, the retraction member 130 is stretched and thus imposes a force component to the second tensioning member 120 to pull the first and the second ends 30a, 30b of the flexible elongated element 30. As the wheel is turned, the second tensioning member 120 will be retracted towards the first tensioning member 110 and the anti skid device 10 will be secured to the wheel 40 as described above.

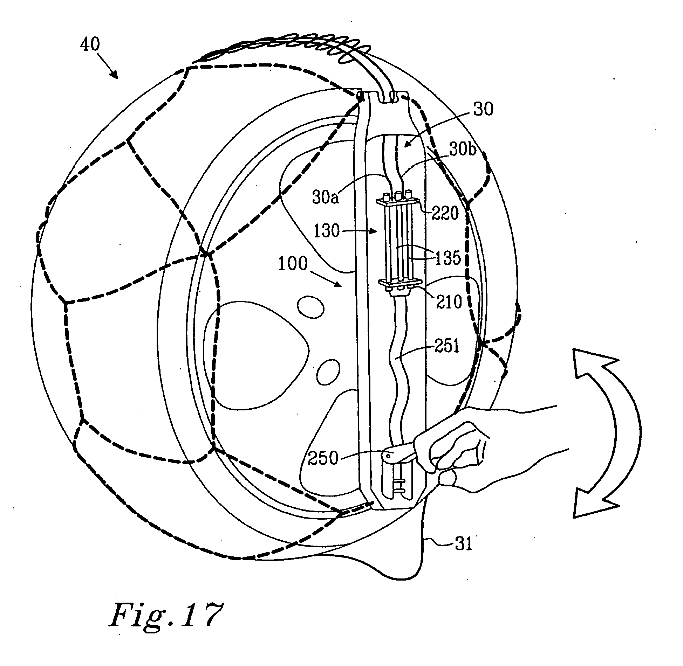

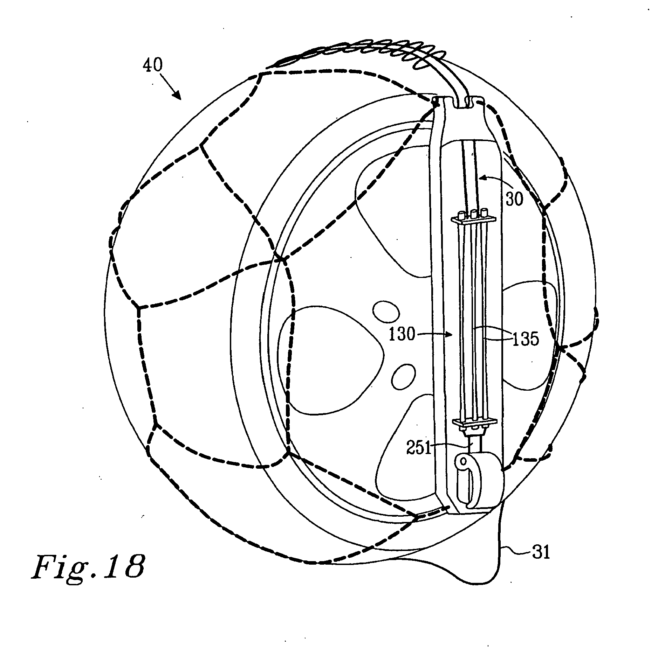

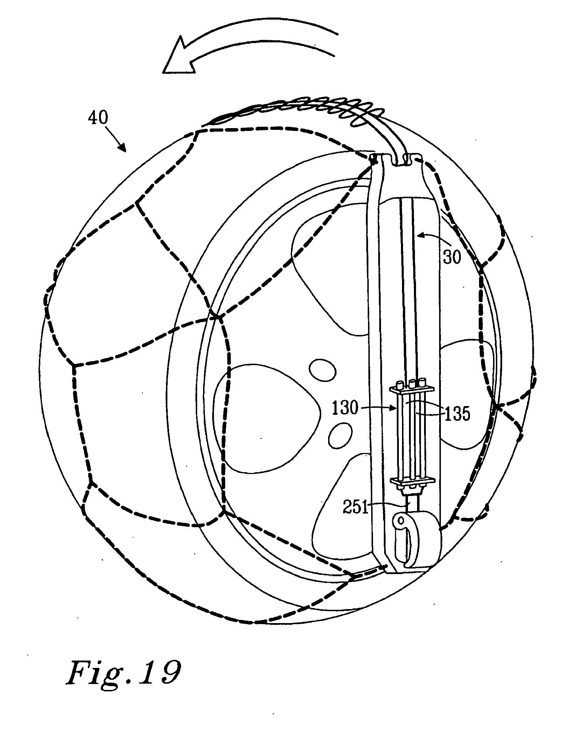

Figure 17-19 shows a second embodiment of the connection arrangement 100. In the shown embodiment, a first tensioning member 210 can be operated using a tension device, in this case in the form of a handle 250 which is in working cooperation with a tape member 251, or foot pad (not shown) using a repeatable pivot motion. The tape member 251 is winded up around a hub by means of the handle 250. As the pivot handle 250 is moved up and down as shown in figure 17, the retraction member 130, in the form of a plurality of springs 135, are biased, or stretched, thus imposing a force component to the first and the second ends 30a, 30b of the flexible elongated element 30. The connection member between the springs 135 is in this case considered to be a second tensioning member 220. As the wheel 40 is turned, the retraction member 130 is retracted and the anti slip device 10 is secured to the wheel 40, as described above. The handle 250 can of course be locked using a lock mechanism.

## Claims

1. An anti slip device (10) for a wheel (40) having a first side (40a), a second side (40b) and a tread (41), said anti slip device (10) comprising a first connection arrangement (11) adapted to be positioned substantially adjacent said first side (40a) of said wheel (40),
a second connection arrangement (12) adapted to be positioned substantially adjacent said second side (40b) of said wheel (40), and
at least one anti slip member (13) extending between said first connection arrangement (11) and said a second connection arrangement (12),
said at least one anti slip member (13) is adapted to provide said tread (41) of said wheel (40) with an anti slip surface and,
a securing arrangement (100) for securing said anti slip device (10) to said wheel (40), said securing arrangement (100) comprises a flexible elongated element (30), having a first and a second end (30a, 30b),
said first connection arrangement (11) comprises a first arc formed portion (20) having a first end (21) and a second arc formed portion (22) having a first end (23), said flexible elongated element (30) extends displaceably between, and past,
a first working point (21a) on said first are formed portion (20) and a second working point (23a) on said second are formed portion (22), enabling upon tightening of said flexible elongated element (30) said first ends (21, 23) of said arc formed portions (20, 22) to be displaced towards each other to a position at which said anti slip device (10) can be secured to said wheel (40),
**characterized in that**
said flexible elongated element (30) is configured to extend across said tread (41) of said wheel (40) at a first position, and **in that** said first ends (21, 23) of said first and second arc formed portion (20, 22) are arranged substantially opposite of said first position, with respect to said first connection member (11) and said wheel (40), after said anti slip device (10) has been mounted on said wheel (40).

2. The anti slip device (10) according to claim 1, wherein first working point (21 a) is substantially at said first end (21) of said first arc formed portion (20) and said second working point (22a) is substantially at said first end (23) of said second arc formed portion (22).

3. The anti slip device (10) according to claim 1 or 2, wherein first arc formed portion (20) and said second are formed portion (22) each comprises a second end, wherein said first arc formed portion (20) and said second are formed portion (22) are pivotally connected at said second ends.

4. The anti slip device (10) according to claim 1 or 2, wherein first arc formed portion (20) and said second arc formed portion (22) are integrally formed.

5. The anti slip device (10) according to any preceding claims, wherein said flexible elongated element (30) runs substantially adjacent said first and second arc formed portions (20, 22).

6. The anti slip device (10) according to claim 5, wherein said flexible elongated element (30) extends along the full length of said first and second are formed portions (20, 22).

7. The anti slip device (10) according to any of the preceding claims, wherein said first and second ends (30a, 30b) of said flexible elongated element (30) Is arranged to said securing arrangement (100) for securing said anti slip device to said wheel (40).

8. The anti slip device (10) according to claim 7, wherein said securing arrangement (100) comprises a first tensioning member (110, 210) adapted to impart a force component to said flexible elongated element (30),

9. The anti slip device (10) according to claim 8, wherein said first tensioning member (110, 210) is adapted to be foot operated.

10. The anti slip device (10) according to claim 9, wherein said first tensioning member (110) comprises a pivotable foot pad (150).

11. The anti slip device (10) according to any of the claims 7-10, wherein said securing arrangement (100) comprises an elongated base member (103) having a first and second end (101, 102), and said first tensioning member (110, 210) of said securing arrangement (100) is adapted to be displaced in the longitudinal direction of said elongated base member (103).

12. The anti slip device (10) according to any of the claims 8-11, wherein said securing arrangement (100) comprises a second tensioning member (120, 220), and in that at least one retraction member (130, 135) is arranged between said first and second tensioning members (110, 210, 120, 220).

13. The anti slip device (10) according to claim 12, wherein said first tensioning member (110) is adapted to extend said at least one retraction member (30) to a tension state upon operation of said first tensioning member (110, 210), and in that said second tensioning member (120, 220) of said securing arrangement (100) is adapted to be retracted towards said first tensioning member (110, 210) by said at least one retraction member (130).

14. The anti slip device (10) according to claim 13, wherein said first and second ends (30a, 30b) of said flexible elongated element (30) is attached to said second tensioning member (120, 220).

15. The anti slip device (10) according to any of the claims 11-14, wherein at least one, optionally both, of said first and said second tensioning members (110, 120), and said elongated base member (103), comprises lock means enabling said first and said second tensioning members (110, 120) to be displaced in a direction towards the second end (102) of said elongated base member (103), while being prevented from being displaced in a direction towards said first end (101) of said elongated base member (103).

16. The anti slip device (10) according to any preceding claims, wherein said first end (21) of said first arc portion (20) and said first end (23) of said second arc formed portion (23) are formed by a bendable but substantially self retaining material, such as spring steel.

17. The anti slip device (10) according to any preceding claims, wherein said anti slip device (10) is a snow chain (10b) for a wheel (40).

18. The anti slip device (10) according to any preceding claims, wherein said first and second ends (30a, 30b) of said flexible elongated element (30) are connected together distinctly or indistinctly so as to form a loop.

19. The anti slip device (10) according to any preceding claims, wherein said first and second arc formed portions (20, 22) are separate arc formed parts.

## Patentansprüche

1. Antirutschvorrichtung (10) für ein Rad (40) mit einer ersten Seite (40a), einer zweiten Seite (40b) und einer Lauffläche (41), wobei die Antirutschvorrichtung (10) Folgendes umfasst:
eine erste Verbindungsanordnung (11), die so ausgelegt ist, dass sie im Wesentlichen angrenzend an die erste Seite (40a) des Rads (40) platziert wird,
eine zweite Verbindungsanordnung (12), die so ausgelegt ist, dass sie im Wesentlichen angrenzend an die zweite Seite (40b) des Rads (40) platziert wird, und
mindestens ein Antirutschelement (13), das zwischen der ersten Verbindungsanordnung (11) und der zweiten Verbindungsanordnung (12) verläuft,
wobei das mindestens eine Antirutschelement (13) so ausgelegt ist, dass es die Lauffläche (41) des Rads (40) mit einer Antirutschfläche versieht, und
eine Sicherungsanordnung (100) zum Sichern der Antirutschvorrichtung (10) an dem Rad (40), wobei die Sicherungsanordnung (100) ein flexibles längliches Element (30) umfasst, das ein erstes und ein zweites Ende (30a, 30b) aufweist,
wobei die erste Verbindungsanordnung (11) einen ersten bogenförmigen Abschnitt (20) mit einem ersten Ende (21) und einen zweiten bogenförmigen Abschnitt (22) mit einem ersten Ende (23) umfasst, das flexible längliche Element (30) verlagerbar zwischen, und vorbei an, einem ersten Arbeitspunkt (21 a) an dem ersten bogenförmigen Abschnitt (20) und einem zweiten Arbeitspunkt (23a) an dem zweiten bogenförmigen Abschnitt (22) verläuft, wodurch beim Festziehen des flexiblen länglichen Elements (30) ermöglicht wird, dass die ersten Enden (21, 23) der bogenförmigen Abschnitte (20, 22) aufeinander zu in eine Stellung versetzt werden, in der die Antirutschvorrichtung (10) an dem Rad (40) gesichert werden kann,
**dadurch gekennzeichnet, dass**
das flexible längliche Element (30) so ausgelegt ist, dass es über die Lauffläche (41) des Rads (40) in einer ersten Position verläuft, und dadurch, dass die ersten Enden (21, 23) des ersten und zweiten bogenförmigen Abschnitts (20, 22) im Wesentlichen gegenüber der ersten Position, bezogen auf das erste Verbindungselement (11) und das Rad (40), angeordnet sind, nachdem die Antirutschvorrichtung (10) an dem Rad (40) montiert worden ist.

2. Antirutschvorrichtung (10) nach Anspruch 1, wobei sich der erste Arbeitspunkt (21 a) im Wesentlichen an dem ersten Ende (21) des ersten bogenförmigen Abschnitts (20) befindet und sich der zweite Arbeitspunkt (22a) im Wesentlichen an dem ersten Ende (23) des zweiten bogenförmigen Abschnitts (22) befindet.

3. Antirutschvorrichtung (10) nach Anspruch 1 oder 2, wobei der erste bogenförmige Abschnitt (20) und der zweite bogenförmige Abschnitt (22) jeweils ein zweites Ende umfassen,
wobei der erste bogenförmige Abschnitt (20) und der zweite bogenförmige Abschnitt (22) schwenkbar an den zweiten Enden verbunden sind.

4. Antirutschvorrichtung (10) nach Anspruch 1 oder 2, wobei der erste bogenförmige Abschnitt (20) und der zweite bogenförmige Abschnitt (22) einteilig geformt sind.

5. Antirutschvorrichtung (10) nach vorhergehenden Ansprüchen, wobei sich das flexible längliche Element (30) im Wesentlichen angrenzend an den ersten und zweiten bogenförmigen Abschnitt (20, 22) erstreckt.

6. Antirutschvorrichtung (10) nach Anspruch 5, wobei das flexible längliche Element (30) entlang der ganzen Länge des ersten und zweiten bogenförmigen Abschnitts (20, 22) verläuft.

7. Antirutschvorrichtung (10) nach vorhergehenden Ansprüchen, wobei das erste und zweite Ende (30a, 30b) des flexiblen länglichen Elements (30) zum Sichern der Antirutschvorrichtung an dem Rad (40) an der Sicherungsanordnung (100) angeordnet sind.

8. Antirutschvorrichtung (10) nach Anspruch 7, wobei die Sicherungsanordnung (100) ein erstes Spannelement (110, 210) umfasst, das so ausgelegt ist, dass es eine Kraftkomponente auf das flexible längliche Element (30) ausübt.

9. Antirutschvorrichtung (10) nach Anspruch 8, wobei das erste Spannelement (110, 210) so ausgelegt ist, dass es mit dem Fuß betätigt wird.

10. Antirutschvorrichtung (10) nach Anspruch 9, wobei das erste Spannelement (110) eine schwenkbare Fußauflage (150) umfasst.

11. Antirutschvorrichtung (10) nach einem der Ansprüche 7 bis 10, wobei die Sicherungsanordnung (100) ein längliches Trägerelement (103) mit einem ersten und zweiten Ende (101, 102) umfasst und das erste Spannelement (110, 210) der Sicherungsanordnung (100) so ausgelegt ist, dass es in der Längsrichtung des länglichen Trägerelements (103) verschoben wird.

12. Antirutschvorrichtung (10) nach einem der Ansprüche 8 bis 11, wobei die Sicherungsanordnung (100) ein zweites Spannelement (120, 220) umfasst, und dadurch, dass mindestens ein Einzugelement (130, 135) zwischen dem ersten und zweiten Spannelement (110, 210, 120, 220) angeordnet ist.

13. Antirutschvorrichtung (10) nach Anspruch 12, wobei das erste Spannelement (110) so ausgelegt ist, dass beim Betätigen des ersten Spannelements (110, 210) das mindestens eine Einzugelement (30) in einen Spannzustand auseinandergezogen wird, und dadurch, dass das zweite Spannelement (120, 220) der Sicherungsanordnung (100) so ausgelegt ist, dass es von dem mindestens einen Einzugelement (130) in Richtung des ersten Spannelements (110, 210) eingezogen wird.

14. Antirutschvorrichtung (10) nach Anspruch 13, wobei das erste und zweite Ende (30a, 30b) des flexiblen länglichen Elements (30) an dem zweiten Spannelement (120, 220) befestigt sind.

15. Antirutschvorrichtung (10) nach einem der Ansprüche 11 bis 14, wobei mindestens eins, optional beide, von dem ersten und dem zweiten Spannelement (110, 120) und das längliche Trägerelement (103) Arretiermittel umfassen, die ermöglichen, dass das erste und das zweite Spannelement (110, 120) in eine Richtung auf das zweite Ende (102) des länglichen Trägerelements (103) zu verschoben werden, während sie daran gehindert werden, in eine Richtung auf das erste Ende (101) des länglichen Trägerelements (103) zu verschoben zu werden.

16. Antirutschvorrichtung (10) nach vorhergehenden Ansprüchen, wobei das erste Ende (21) des ersten Bogenabschnitts (20) und das erste Ende (23) des zweiten bogenförmigen Abschnitts (23) aus einem biegbaren, jedoch im Wesentlichen selbsthaltenden Material wie Federstahl gebildet sind.

17. Antirutschvorrichtung (10) nach vorhergehenden Ansprüchen, wobei es sich bei der Antirutschvorrichtung (10) um eine Schneekette (10b) für ein Rad (40) handelt.

18. Antirutschvorrichtung (10) nach vorhergehenden Ansprüchen, wobei das erste und zweite Ende (30a, 30b) des flexiblen länglichen Elements (30) separat oder ohne scharfe Trennung miteinander verbunden sind und so eine Schlaufe bilden.

19. Antirutschvorrichtung (10) nach vorhergehenden Ansprüchen, wobei der erste und zweite bogenförmige Abschnitt (20, 22) separate bogenförmige Teile sind.

## Revendications

1. Dispositif anti-dérapage (10) pour une roue (40) comportant un premier côté (40a), un second côté (40b) et une bande de roulement (41), ledit dispositif anti-dérapage (10) comprenant
un premier agencement de liaison (11) adapté pour être positionné essentiellement adjacent audit premier côté (40a) de ladite roue (40),
un second agencement de liaison (12) adapté pour être positionné essentiellement adjacent audit second côté (40b) de ladite roue (40), et
au moins un élément anti-dérapage (13) s'étendant entre ledit premier agencement de liaison (11) et ledit second agencement de liaison (12),
ledit au moins un élément anti-dérapage (13) étant adapté pour doter ladite bande de roulement (41) de ladite roue (40) d'une surface anti-dérapage et
un agencement de fixation (100) destiné à fixer ledit dispositif anti-dérapage (10) sur ladite roue (40), ledit agencement de fixation (100) comprenant un élément allongé flexible (30), comportant une première et une seconde extrémité (30a, 30b),
ledit premier agencement de liaison (11) comprenant une première partie en forme d'arc (20) comportant une première extrémité (21) et une seconde partie en forme d'arc (22) comportant une première extrémité (23), ledit élément allongé flexible (30) s'étendant mobile entre, et au-delà, d'un premier point de travail (21 a) sur ladite première partie en forme d'arc (20) et un second point de travail (23a) sur ladite seconde partie en forme d'arc (22), permettant, lors du serrage dudit élément allongé flexible (30), auxdites premières extrémités (21, 23) desdites parties en forme d'arc (20, 22) d'être déplacées l'une vers l'autre dans une position dans laquelle ledit dispositif anti-dérapage (10) peut être fixé sur ladite roue (40),
**caractérisé en ce que**
ledit élément allongé flexible (30) est configuré pour s'étendre à travers ladite bande de roulement (41) de ladite roue (40) dans une première position, et **en ce que** lesdites premières extrémités (21, 23) de ladite première et ladite seconde partie en forme d'arc (20, 22) sont agencées essentiellement en face de ladite première position, par rapport audit premier élément de liaison (11) et à ladite roue (40), après que ledit dispositif anti-dérapage (10) a été monté sur ladite roue (40).

2. Dispositif anti-dérapage (10) selon la revendication 1, dans lequel le premier point de travail (21 a) est essentiellement sur ladite première extrémité (21) de ladite première partie en forme d'arc (20) et ledit second point de travail (22a) est essentiellement sur ladite première extrémité (23) de ladite seconde partie en forme d'arc (22).

3. Dispositif anti-dérapage (10) selon la revendication 1 ou 2, dans lequel ladite première partie en forme d'arc (20) et ladite seconde partie en forme d'arc (22) comprennent chacune une seconde extrémité,
dans lequel ladite première partie en forme d'arc (20) et ladite seconde partie en forme d'arc (22) sont reliées de manière pivotante sur lesdites secondes extrémités.

4. Dispositif anti-dérapage (10) selon la revendication 1 ou 2, dans lequel ladite première partie en forme d'arc (20) et ladite seconde partie en forme d'arc (22) sont formées d'un seul tenant.

5. Dispositif anti-dérapage (10) selon l'une quelconque des revendications précédentes, dans lequel ledit élément allongé flexible (30) s'étend essentiellement adjacent auxdites première et seconde parties en forme d'arc (20, 22).

6. Dispositif anti-dérapage (10) selon la revendication 5, dans lequel ledit élément allongé flexible (30) s'étend le long de toute la longueur desdites première et seconde parties en forme d'arc (20, 22).

7. Dispositif anti-dérapage (10) selon l'une quelconque des revendications précédentes, dans lequel lesdites première et seconde extrémités (30a, 30b) dudit élément allongé flexible (30) sont agencées sur ledit agencement de fixation (100) pour fixer ledit dispositif anti-dérapage sur ladite roue (40).

8. Dispositif anti-dérapage (10) selon la revendication 7, dans lequel ledit agencement de fixation (100) comprend un premier élément de serrage (110, 210) adapté pour appliquer une composante de force sur ledit élément allongé flexible (30).

9. Dispositif anti-dérapage (10) selon la revendication 8, dans lequel ledit premier élément de serrage (110, 210) est adapté pour être actionné au pied.

10. Dispositif anti-dérapage (10) selon la revendication 9, dans lequel ledit premier élément de serrage (110) comprend un appui de pied pivotant (150).

11. Dispositif anti-dérapage (10) selon l'une quelconque des revendications 7 à 10, dans lequel ledit agencement de fixation (100) comprend un élément de base allongé (103) comportant une première et une seconde extrémité (101, 102), et ledit premier élément de serrage (110, 210) dudit agencement de fixation (100) est adapté pour être déplacé dans la direction longitudinale dudit élément de base allongé (103).

12. Dispositif anti-dérapage (10) selon l'une quelconque des revendications 8 à 11, dans lequel ledit agencement de fixation (100) comprend un second élément de serrage (120, 220), et en ce qu'au moins un élément de rétraction (130, 135) est agencé entre lesdits premier et second éléments de serrage (110, 210, 120, 220).

13. Dispositif anti-dérapage (10) selon la revendication 12, dans lequel ledit premier élément de serrage (110) est adapté pour étirer ledit au moins un élément de rétraction (30) dans un état de tension lors de l'actionnement dudit premier élément de serrage (110, 210), et en ce que ledit second élément de serrage (120, 220) dudit agencement de fixation (100) est adapté pour être rétracté vers ledit premier élément de serrage (110, 210) par ledit au moins un élément de rétraction (130).

14. Dispositif anti-dérapage (10) selon la revendication 13, dans lequel lesdites première et seconde extrémités (30a, 30b) dudit élément allongé flexible (30) sont reliées audit second élément de serrage (120, 220).

15. Dispositif anti-dérapage (10) selon l'une quelconque des revendications 11 à 14, dans lequel au moins un, de manière facultative les deux, dudit premier et dudit second élément de serrage (110, 120), et ledit élément de base allongé (103), comprennent des moyens de verrouillage permettant audit premier et audit second élément de serrage (110, 120) d'être déplacés dans une direction allant vers la seconde extrémité (102) dudit élément de base allongé (103), tout en étant empêchés d'être déplacés dans une direction allant vers ladite première extrémité (101) dudit élément de base allongé (103).

16. Dispositif anti-dérapage (10) selon l'une quelconque des revendications précédentes, dans lequel ladite première extrémité (21) de ladite première partie d'arc (20) et ladite première extrémité (23) de ladite seconde partie en forme d'arc (23) sont formées par un matériau pliable mais qui se maintient essentiellement de lui-même, tel que de l'acier à ressort.

17. Dispositif anti-dérapage (10) selon l'une quelconque des revendications précédentes, dans lequel ledit dispositif anti-dérapage (10) est une chaîne à neige (10b) pour une roue (40).

18. Dispositif anti-dérapage (10) selon l'une quelconque des revendications précédentes, dans lequel lesdites première et seconde extrémités (30a, 30b) dudit élément allongé flexible (30) sont reliées l'une à l'autre distinctement ou indistinctement de manière à former une boucle.

19. Dispositif anti-dérapage (10) selon l'une quelconque des revendications précédentes, dans lequel lesdites première et seconde parties en forme d'arc (20, 22) sont des parties en forme d'arc séparées.
